# EUROPÄISCHE PATENTSCHRIFT

(11) **EP 4 274 738 B1**
(45) Veröffentlichungstag und Bekanntmachung des Hinweises auf die Patenterteilung: **25.11.2026**
(21) Anmeldenummer: 22700374.6
(22) Anmeldetag: 10.01.2022
(51) Int. Cl.: B32B 38/10, B26F 1/38, B32B 39/00, B42D 25/45, G06K 19/077

(54) **VERFAHREN ZUM HERSTELLEN EINES MEHRSCHICHTIGEN LAMINIERTEN DOKUMENTENSUBSTRATS MIT EINEM EINLEGEKÖRPER**
METHOD FOR PRODUCING A MULTILAYER LAMINATED DOCUMENT SUBSTRATE HAVING AN INSERT
PROCÉDÉ DE FABRICATION D'UN SUBSTRAT DE DOCUMENT STRATIFIÉ MULTICOUCHE POURVU D'UN INSERT

(30) Priorität: 11.01.2021 DE 102021100319
(43) Veröffentlichungstag der Anmeldung: 15.11.2023
(73) Patentinhaber: MB Automation GmbH & Co. KG, 93426 Roding (DE)
(72) Erfinder: LUKOVIC, Vidoje, 93426 Roding (DE); BETZ, Korbinian, 93426 Roding (DE); KURTESHI, Kastriot, 92444 Roding (DE); SCHOBER, Albert, 93453 Roding (DE)
(74) Vertreter: Platzöder Patentanwaltsgesellschaft mbH
(86) Internationale Anmeldenummer: PCT/EP2022/050362
(87) Internationale Veröffentlichungsnummer: WO 2022/148873

(56) Entgegenhaltungen:
- EP-B1- 3 359 389
- WO-A1-2015/104011
- DE-A1- 102007 016 779
- US-A- 5 252 167

## Beschreibung

Die vorliegende Erfindung betrifft ein Verfahren zum Herstellen eines mehrschichtigen laminierten Dokumentensubstrats mit zumindest einem Einlegekörper, insbesondere einem transparenten Einlegekörper zur Erzeugung eines Fensterbereichs in dem Dokumentensubstrat.

Aus dem Stand der Technik ist eine Vielzahl verschiedener Typen von Dokumenten bekannt, die jeweils zumindest ein aus einer Mehrzahl von übereinandergestapelt liegenden und zu einem Laminat verbundenen Substratschichten aufgebautes Dokumentensubstrat aufweisen oder insbesondere gänzlich daraus bestehen. Solche Dokumente können insbesondere kartenförmig oder buchförmig sein, wobei im letzteren Fall das Dokumentensubstrat eine Seite des Dokuments bilden kann. Derartige Dokumentensubstrate kommen oftmals in Form von oder als Teil von Sicherheitsdokumenten, wie z.B. Reisepässen, Ausweiskarten und vielen anderen Arten von personalisierten Chipkarten, wie etwa Bankkarten, Kreditkarten, Mitgliedskarten, Zugangsberechtigungskarten oder von Geldscheinen oder anderen Wertdokumenten zum Einsatz.

Bei einigen solcher Dokumente ist es wünschenswert oder erforderlich, an einer Stelle des Dokuments in eine oder mehrere, insbesondere auch sämtliche, Substratschichten des Dokuments einen Einlegekörper aufzunehmen, um dem Dokument an dieser Stelle zumindest eine besondere von denen den umgebenden Substratbereichen unterschiedliche Eigenschaft zu verleihen. Insbesondere kann es in dieser Hinsicht wünschenswert sein, in einem ansonsten intransparenten Laminat einen transparenten Einlegekörper vorzusehen, um in dem Dokumentensubstrat ein transparentes oder zumindest teiltransparentes Fenster bereitzustellen.

Bisher bekannte Verfahren zur Herstellung eines Dokumentensubstrats mit Einlegekörper beruhen darauf, dass ein Stapel aus mehreren lose übereinander gelegten Substratschichten während der Verarbeitung dieses Stapels zur Herstellung des fertigen Dokumentensubstrats zur Erzeugung einer temporären Fixierung mit Druck und oder Vakuum beaufschlagt wird. So soll ein Verrutschen der einzelnen Substratschichten gegeneinander während der Verarbeitung, insbesondere bei der Integration eines Einlegekörpers, und somit die Häufigkeit für ein Auftreten von Herstellungsfehlern verringert werden. Auch werden dabei zusätzlich regelmäßig Schweißprozesse am Rande, d.h. an der Innenwand, einer zur Aufnahme eines Einlegekörpers geschaffenen Öffnung im Stapel eingesetzt, um dort lokal eine zusätzliche gegenseitige Fixierung der einzelnen Substratschichten sowie eine vorläufige Fixierung eines in die Öffnung eingebrachten Einlegekörpers innerhalb der Öffnung zu erreichen.

DE 10 2007 016779 A1 offenbart ein Verfahren zur Herstellung von Wert- oder Sicherheitsdokumenten, wie z. B. Scheckkarten oder Sicherheitsausweisen mit Kavitäten zur späteren Einarbeitung von Modulen, wie z. B. Speichermodulen, Mikroprozessoren, Displaymodulen, RFID-Modulen oder anderen. EP 3 359 389 B1 offenbart ein Verfahren zur Herstellung einer Mehrzahl von Sicherheitsblättern zum Anzeigen von persönlichen Daten.

Der vorliegenden Erfindung liegt die Aufgabe zugrunde, die Herstellung eines Dokumentensubstrats mit Einlegekörper, insbesondere im Hinblick auf die erreichbare Herstellungseffizienz und/oder Qualität, noch weiter zu verbessern.

Die Lösung dieser Aufgabe wird gemäß der Lehre des unabhängigen Anspruchs erreicht. Verschiedene Ausführungsformen und Weiterbildungen der Erfindung sind Gegenstand der Unteransprüche.

Ein erster Aspekt der Erfindung betrifft ein Verfahren zum Herstellen eines mehrschichtigen laminierten Dokumentensubstrats mit einem Einlegekörper insbesondere mit einem transparenten Einlegekörper zur Erzeugung eines Fensterbereichs in dem Dokumentensubstrat. Das Verfahren wird mittels einer Vorrichtung zur Dokumentensubstratherstellung ausgeführt und weist folgende Prozesse auf: (i) Bereitstellen eines mehrschichtigen Stapels mit einer Mehrzahl von aufeinanderliegenden, insbesondere band-, folien- oder plattenförmigen, flachen Substratschichten, wobei die Substratschichten zumindest in einem Flächenabschnitt des Stapels stoffschlüssig miteinander verbunden sind oder werden; (ii) Erzeugen einer Ausnehmung in dem mehrschichtigen Stapel, sodass die seitliche Innenwand der erzeugten Ausnehmung innerhalb des Flächenabschnitts verläuft; (iii) Füllen der Ausnehmung mittels Einbringen eines Einlegekörpers in die Ausnehmung; und (iv) Stoffschlüssiges Befestigen des Einlegekörpers in der Ausnehmung unter Wärmezufuhr zur Bereitstellung eines mehrschichtigen laminierten Dokumentensubstrats mit Einlegekörper.

Unter einem "Dokumentensubstrat" ist im Sinne der Erfindung insbesondere ein Substrat zu verstehen, welches dazu konfiguriert und/oder geeignet ist, als Dokument oder Dokumentenseite verwendet zu werden. Insbesondere kann das Dokumentensubstrat als Sicherheitsdokument oder als Seite eines mehrseitigen Sicherheitsdokuments konfiguriert und/oder geeignet sein.

Unter einem "Einlegekörper" im Sinne der Erfindung ist insbesondere ein Körper aus Materie zu verstehen, der, insbesondere im Gegensatz zu einer flüssigen Substanz, eine bestimmte Gestalt aufweist und der konfiguriert ist, insbesondere passgenau, in eine Ausnehmung, d.h. eine Vertiefung oder eine durchgängige Öffnung, in einem flachen Substrat eingebracht, insbesondere eingesetzt oder eingelegt, zu werden, um nach seiner Befestigung in der Ausnehmung einen permanenten Bestandteil des Substrats zu bilden und dabei die Ausnehmung zu füllen.

Unter einer "flachen Substratschicht" im Sinne der Erfindung ist insbesondere eine auf zwei gegenüberliegenden Seiten von je einer im Verhältnis zu ihrer Dicke sehr ausgedehnten, insbesondere ebenen, Fläche begrenzte Materieschicht eines Schichtenstapels zu verstehen.

Unter eine "Ausnehmung" im Sinne der Erfindung ist insbesondere ein Hohlraum innerhalb eines Körpers zu verstehen, der an zumindest einer Seite des Körpers nach außen hin geöffnet ist. Die Ausnehmung kann somit insbesondere nur eine Vertiefung sein, die sich nicht durch den gesamten Körper hindurch erstreckt, oder aber eine Öffnung, die zwei verschiedene Stellen an der Oberfläche des Körpers, insbesondere an gegenüberliegenden Seiten desselben, im Sinne eines Tunnels durchgängig miteinander verbindet. Der Hohlraum kann insbesondere bereits bei der Herstellung des Körpers als ab initio vorhandene Aussparung, oder nachträglich mittels Materialentfernung von dem Körper hergestellt worden sein.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier verwendet wird, ist im Sinne von "zwei oder mehr" zu verstehen.

Unter dem Begriff "konfiguriert" oder "eingerichtet" eine bestimmte Funktion zu erfüllen, (und jeweiligen Abwandlungen davon) ist im Sinne der Erfindung zu verstehen, dass die entsprechende Vorrichtung bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das konfigurieren mittels einer Auswahl einer dieser Konfigurationen bzw. Betriebsmodi erfolgen kann.

Beim vorgenannten Verfahren wird der Schutz vor einem Verrutschen der Substratschichten gegeneinander während der Verarbeitung dadurch erreicht, dass die Substratschichten vorab miteinander in zumindest einem Flächenabschnitt des Stapels stoffschlüssig miteinander verbunden sind (d. h. bereits in diesem Zustand der Vorrichtung zugeführt werden) oder im Rahmen des Verfahrens verbunden werden. Da das Erzeugen der Ausnehmung gezielt innerhalb dieses Flächenabschnitts verläuft, kann damit gerade bei diesem ansonsten für ein Verrutschen der Substratschichten gegeneinander besonders anfälligen Prozess ein solches Verrutschen effektiv vermieden werden.

Dies macht insbesondere zusätzliche Klemm-, Vakuum- oder Schweißprozesse überflüssig und erlaubt so eine Steigerung der Verfahrenseffizienz unter gleichzeitiger Aufrechterhaltung oder sogar Steigerung der erreichbaren Herstellungsqualität für das Dokumentensubstrat, insbesondere aufgrund des Wegfalls von unerwünschten Beschädigungen oder anderen Beeinträchtigungen des Werkstücks als Folge der vorgenannten nun obsoleten Prozesse.

Da der entsprechende Verbindungsprozess zur Herstellung der zunächst abschnittsweisen stoffschlüssigen Verbindung vor den im Hinblick auf ein Verrutschen besonders kritischen nachfolgenden Prozessen zur Erzeugung der Ausnehmung und zum Füllen derselben mittels Einbringen eines Einlegekörpers in die Ausnehmung sowie dem nachfolgenden Befestigen des Einlegekörpers in der Ausnehmung erfolgt, lässt sich somit ein entsprechender Effizienz- und Qualitätsgewinn über den gesamten durch das Verfahren definierten Herstellungsprozess für das Dokumentensubstrat hinweg erreichen. Der Effizienzgewinn kann sich insbesondere in einer vereinfachten und schnelleren Herstellung, insbesondere auch zu reduzierten Kosten, zeigen. Der Qualitätsgewinn kann insbesondere neben der Steigerung der erreichbaren Produktqualität auch zur Reduktion von Ausschuss genutzt werden und somit diesbezüglich auch einen weiteren Effizienzgewinn mit sich bringen.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Bei einigen Ausführungsformen weist das Verfahren einen oder mehrere der folgenden Schritte auf: (i) das Bereitstellen des mehrschichtigen Stapels erfolgt so, dass die Substratschichten in mehreren Flächenabschnitten des Stapels stoffschlüssig miteinander verbunden sind oder die Substratschichten zumindest in einem Flächenabschnitt des Stapels stoffschlüssig miteinander verbunden sind oder (insbesondere gleichzeitig) werden; (ii) Das Erzeugen der Ausnehmung mit einem, insbesondere gleichzeitigen, Erzeugen mehrere weiterer Ausnehmungen einhergeht; (iii) der Einlegekörper sowie zumindest ein weiterer Einlegekörper für die Aufnahme in je eine Ausnehmung gleichzeitig erzeugt werden; (iv) Das Füllen der Ausnehmung mit einem, insbesondere gleichzeitigen, Füllen zumindest einer weiteren der Ausnehmungen durch jeweiliges Einbringen eines jeweiligen Einlegekörper einher geht.

Bei einigen Ausführungsformen weist das Befestigen des Einlegekörpers in der Ausnehmung ein vollflächiges Laminieren des mehrschichtigen Stapels einschließlich des in die Ausnehmung aufgenommenen Einlegekörpers auf. Diese Ausführungsformen sind insbesondere in Kombination mit einem nur auf den einen Flächenabschnitt und optional auch weitere Flächenabschnitte des Stapels angewandte, nicht die gesamte Stapelfläche betreffende Vorlamination zur Erzeugung der stoffschlüssigen Verbindung der Substratschichten vor dem Erzeugen der Ausnehmung vorteilhaft, da dieselbe Verbindungsart (Laminieren) sowohl für die Vorlamination als auch die zum Befestigen des Einlegekörpers eingesetzte Lamination verwendet werden kann. Das vollflächige Laminieren hat zudem den Vorteil gegenüber einem nur punkt- oder bereichsweisen Laminieren, dass am Endprodukt (Dokumentensubstrat) sichtbare Kanten am Einlegekörper oder der Ausnehmung vermieden werden können. Insbesondere kann auch ein Verschweißen des Einlegekörpers mit dem es umgebenden Bereich des Stapels entfallen, was jeweils zu Erreichung der genannten Vorteile bezüglich Qualität und/oder Effizienz genutzt werden kann.

Bei einigen dieser Ausführungsformen weist das Bereitstellen des mehrschichtigen Stapels einen ersten Laminierprozess auf, bei dem ein abschnittsweises stoffschlüssiges Verbinden der Substratschichten einschließlich im Bereich des zumindest einen Flächenabschnitts des Stapels mittels einer Laminiereinrichtung auf solche Weise erfolgt, dass nach diesem ersten Laminierprozess zumindest ein noch nicht laminierter Flächenbereich des Stapels verbleibt (sodass demgemäß hier noch keine Vollamination über die gesamte Stapelfläche hinweg erfolgt). Zudem kann das Befestigen des Einlegekörpers in der Ausnehmung mittels eines zweiten Laminierprozesses zur Durchführung des vollflächigen Laminierens des mehrschichtigen Stapels einschließlich des in die Ausnehmung aufgenommenen Einlegekörpers insbesondere mittels derselben Laminiereinrichtung erfolgen, wie der vorausgegangene erste Laminierprozess. In anderen Worten, der nur eine Teilfläche des Stapels betreffende erste Laminierprozess (Vorlaminieren) und der spätere vollflächige zweite Laminierprozess werden in diesem Falle mit derselben Laminiereinrichtung ausgeführt. Dies erlaubt einen besonders kostengünstigen und kompakten Aufbau der Vorrichtung und dient somit auch der weiteren Steigerung der diesbezüglichen Verfahrenseffizienz. Dabei können der erste Laminierprozess und der zweite Laminierprozess bezüglich desselben Stapels (bzw. herzustellenden Dokumentensubstrats) sequenziell erfolgen. Es ist allerdings auch möglich, mehrere Stapel parallel zu verarbeiten, insbesondere so, dass simultan einer der Stapel den ersten Laminierprozess und ein weiterer Stapel den zweiten Laminierprozess durchläuft. Selbstverständlich lässt sich dieses Konzept auch entsprechend auf eine noch größere Anzahl von simultan zu bearbeitenden Stapeln erweitern, wenn eine entsprechende Anzahl von gleichzeitig betreibbaren Laminiereinrichtungen oder die Möglichkeit einer gleichzeitigen Bearbeitung mehrerer Stapel je Laminiereinrichtung vorgesehen wird.

Bei einigen Ausführungsformen sind oder werden bei dem bereitzustellenden mehrschichtigen Stapel dessen Substratschichten jeweils an einer Mehrzahl verschiedener Flächenabschnitte des Stapels mittels Laminieren verbunden, wobei zumindest zwei, insbesondere sämtliche, dieser Flächenabschnitte eine gleiche Form aufweisen und die Ausnehmung einfach oder mehrfach in je einem dieser Flächenabschnitte erzeugt wird. Dies kann insbesondere dazu genutzt werden, Dokumentensubstrate herzustellen, in denen jeweils eine Mehrzahl von Einlegekörpern eingebracht sind oder aber zur (besonders effizienten) Bearbeitung von Stapeln, aus denen nach dem stoffschlüssigen Befestigen der Einlegekörper in ihren jeweiligen Ausnehmungen eine Vereinzelung zur Gewinnung mehrerer einzelner Dokumentensubstrate, mit je einem oder mehreren der Einlegekörper, aus dem einen Stapel vorgesehen ist.

Bei einigen Ausführungsformen wird die Ausnehmung als eine sich vollständig durch die Dicke des Stapels hindurch erstreckende Öffnung ausgebildet. Dies ist insbesondere dann vorteilhaft, wenn dem herzustellenden Dokumentensubstrat im Bereich der Ausnehmung durchgängig eine oder mehrere andere Eigenschaften verliehen werden sollen, die der Stapel aus Substratschichten selbst nicht aufweist. Vor allem ist dies dann relevant, wenn die Eigenschaften von beiden Seiten des Dokumentensubstrats aus zugänglich sein sollen oder wenn es darauf ankommt, eine Eigenschaft unter Wirkung des Einlegekörpers zu nutzen, die eine durchgängige Öffnung erfordert.

Gemäß der Erfindung ist oder wird der Einlegekörper aus einem Material ausgebildet das in zumindest einem Wellenlängenbereich innerhalb des sichtbaren Bereichs des elektromagnetischen Spektrums transparent oder teiltransparent ist und diese Transparenz beim Befestigen des Einlegekörper, zumindest überwiegend, beibehält. Die Transparenz des Materials liefert somit die Möglichkeit, ein im entsprechenden ausgewählten Wellenlängenbereich transparentes oder teiltransparentes Fenster innerhalb des Dokumentensubstrats auszubilden. Der Fall des teiltransparenten Fensters kann insbesondere so ausgestaltet werden, dass auf oder in dem transparenten Material ein nicht oder nur teilweise transparentes Material auf oder eingebracht wird oder durch gezielte Materialveränderung, beispielsweise mittels eines Laserstrahls, eine Materialverfärbung erzielt wird. So lassen sich beispielsweise Sicherheitsmerkmale, Symbole oder Beschriftungen im Bereich des Fensters ausbilden, die bei einem Durchblick durch das Fenster erkennbar sind.

Ein transparentes oder teiltransparentes Fenster lässt sich im Übrigen auch dann erreichen, wenn die Ausnehmung zwar keine durchgängige Öffnung darstellt, aber jede Substratschicht des Stapels, die im weiteren Strahlengang durch das Fenster liegt, ebenso die geforderte Transparenz aufweist, so dass im Bereich des Fensters an zumindest einer Stelle der gesamte Strahlengang durch entsprechend transparentes Material verläuft.

Bei einigen Ausführungsformen erfolgt das Erzeugen der Ausnehmung mittels Stanzen oder Ausschneiden. Das Ausschneiden kann insbesondere mechanisch oder optisch, insbesondere mittels Laserbearbeitung, erfolgen. Beide Verfahren erlauben hohe Genauigkeit und, insbesondere im Falle des Stanzens, einen hohen Durchsatz.

Bei einigen dieser Ausführungsformen wird zusätzlich aus einem flachen, insbesondere band-, folien- oder plattenförmigen, Grundkörper ebenfalls der Einlegekörper mittels Stanzen oder Ausschneiden hergestellt oder vorkonfiguriert. Das Stanzen bzw. Ausschneiden (insbesondere mechanisch oder optisch) der Ausnehmung einerseits und das Stanzen bzw. Ausschneiden des Einlegekörpers andererseits können insbesondere, vorzugsweise simultan, mittels einer selben Stanz- bzw. Schneideeinrichtung erfolgen. Auch so lässt sich die Effizienz des Verfahrens, insbesondere im Hinblick auf seine Umsetzbarkeit mittels einer sehr kompakten und kostengünstigen Vorrichtung und der erreichbaren Prozessgeschwindigkeit beziehungsweise dem dazu korrespondierenden Durchsatz noch weiter steigern.

Bei einigen dieser Ausführungsformen, bei denen ein Vorkonfigurieren des Einlegekörpers zum Einsatz kommt, weist das Vorkonfigurieren ein anteiliges Stanzen bzw. Ausschneiden auf solche Weise auf, dass dadurch die Außenkontur des Einlegekörpers bereits zumindest überwiegend definiert aber der Einlegekörper noch an zumindest einer Verbindungsstelle mit dem Grundkörper verbunden bleibt, die erst bei einem nachfolgenden Prozess zum Herauslösen des Einlegekörpers aus dem Grundkörper vor oder bei seinem Einsetzen in die Ausnehmung aufgetrennt wird. Derartige Ausführungsformen sind insbesondere dann vorteilhaft, wenn zwischen dem Vorkonfigurieren des Einlegekörpers und dessen Einsetzen in die Ausnehmung ein längerer Zeitraum vergeht und insbesondere dann, wenn dazwischen noch ein oder mehrere weitere Prozess-, Transport- oder Lagerschritte durchgeführt werden. Auf diese Weise kann sichergestellt werden, dass sich der Einlegekörper nicht unbeabsichtigt aus dem Grundkörper löst, bevor der vorgesehene Prozess zum Herauslösen des Einlegekörpers aus dem Grundkörper ausgeführt wird.

Bei einigen Ausführungsformen, wird (i) der Einlegekörper oder (ii) im Falle des Vorkonfigurierens der Grundkörper einschließlich des damit noch verbundenen Einlegekörpers mittels eines Magazins zur Aufnahme und Bereitstellung einer Mehrzahl von Einlegekörpern bzw. Grundkörpern für die weitere Verarbeitung im Rahmen des Verfahrens bereitgestellt. Die Verwendung eines Magazins zu diesem Zweck ist insbesondere dann vorteilhaft, wenn das Bestücken des Magazins außerhalb des verfahrensgemäßen Herstellungsprozesses für das Dokumentensubstrat offline erfolgen soll, oder wenn ein leichtes Umrüsten der Vorrichtung zur Herstellung des Dokumentensubstrats im Hinblick auf verschiedene Produktvarianten leicht und schnell, insbesondere durch einfachen Magazinwechsel, ermöglicht werden soll. Auch zu Transport- oder Lagerzwecken kann die Verwendung eines Magazins für Einlegekörper bzw. Grundkörper vorteilhaft sein.

Bei einigen dazu alternativen Ausführungsformen, wird (i) der Einlegekörper oder (ii) im Falle des Vorkonfigurierens der Grundkörper einschließlich des damit noch verbundenen Einlegekörpers mittels eines bewegten Transportbandes zur Aufnahme und Bereitstellung einer Mehrzahl von Einlegekörpern bzw. Grundkörpern für die weitere Verarbeitung im Rahmen des Verfahrens bereitgestellt. Auf diese Weise lässt sich insbesondere ein kontinuierlicher und Durchsatzstarker Gesamtprozess zur Herstellung des Dokumentensubstrats gestalten.

Bei einigen dieser Ausführungsformen ist oder wird jeder der Grundkörper bandförmig ausgebildet und bildet jeweils selbst das bewegte Transportband. Somit kann hier ein separates Transportband entfallen, da der Grundkörper selbst diese Aufgabe übernimmt und beispielsweise zwischen zwei Rollen oder Walzen (einer abgebenden und einer aufgehenden Rolle oder Walze) verläuft. Hier werden dem Grundkörper nur die zunächst darin befindlichen Einlegekörper entnommen, um sie sodann in die jeweilige Ausnehmung des jeweiligen zu bearbeitenden Stapels einzubringen. Der Grundkörper erfüllt hier somit eine Doppelfunktion, einerseits als Transportmittel zum Zuführen der Einlegekörper und andererseits als Substrat, aus dem die Einlegekörper entnommen werden.

Bei einigen Ausführungsformen erfolgt das Bereitstellen des mehrschichtigen laminierten Substrats mit dem darin aufgenommenen und befestigten Einlegekörper an einer anderen Seite der Vorrichtung zur Dokumentensubstratherstellung als das dem Erzeugen der Ausnehmung vorgelagerte Bereitstellen des mehrschichtigen Stapels. Auf diese Weise lässt sich ein Reihenprozess implementieren, der insbesondere zur Erreichung eines Durchsatzes und zur Integration der Vorrichtung als eine Bearbeitungsstation in eine mehrere Bearbeitungsstationen aufweisende Produktionslinie vorteilhaft sein kann.

Bei einigen dazu alternativen Ausführungsformen erfolgt das Bereitstellen des mehrschichtigen laminierten Substrats mit dem darin aufgenommenen und befestigten Einlegekörper dagegen an einer selben Seite der Vorrichtung zur Dokumentensubstratherstellung, wie das dem Erzeugen der Ausnehmung vorgelagerte Bereitstellen des mehrschichtigen Stapels. Dies ist insbesondere dann vorteilhaft, wenn die Vorrichtung durch eine einzige Bedienperson oder Maschine (wie etwa einen Roboter) gesteuert oder überwacht werden soll, sodass sowohl das Zuführen der Ausgangsprodukte, insbesondere des Stapels, als auch das Ausgeben der hergestellten Dokumentensubstrate von derselben Seite der Vorrichtung her gesteuert bzw. überwacht werden können. Auch kann so die für den Betrieb der Vorrichtung erforderliche Grundfläche reduziert werden, da kein beidseitiges Ein-bzw. Ausgeben der Ausgangsprodukte bzw. Dokumentensubstrate mit entsprechenden beidseitig vorzusehenden Einrichtungen dafür benötigt wird.

Ein zweiter, nicht beanspruchter Aspekt der vorliegenden Offenbarung betrifft eine Vorrichtung zur Dokumentensubstratherstellung. Die Vorrichtung weist auf: (i) Zumindest eine Einrichtung zum stoffschlüssigen Verbinden der Substratschichten eines mehrschichtigen Stapels von aufeinanderliegenden flachen Substratschichten miteinander in zumindest einem Flächenbereich des Stapels; (ii) Zumindest eine Einrichtung zum Erzeugen einer Ausnehmung in dem mehrschichtigen Stapel, sodass die seitliche Innenwand der erzeugten Ausnehmung innerhalb des Flächenabschnitts verläuft; und (iii) Eine Einrichtung zum Füllen der Ausnehmung mittels Einbringen eines Einlegekörpers in die Ausnehmung. Dabei ist die Vorrichtung konfiguriert, das Verfahren nach dem ersten Aspekt der Erfindung auszuführen.

Die in Bezug auf den ersten Aspekt der Erfindung erläuterten Merkmale und Vorteile gelten somit entsprechend auch für die Vorrichtung nach dem zweiten Aspekt.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:

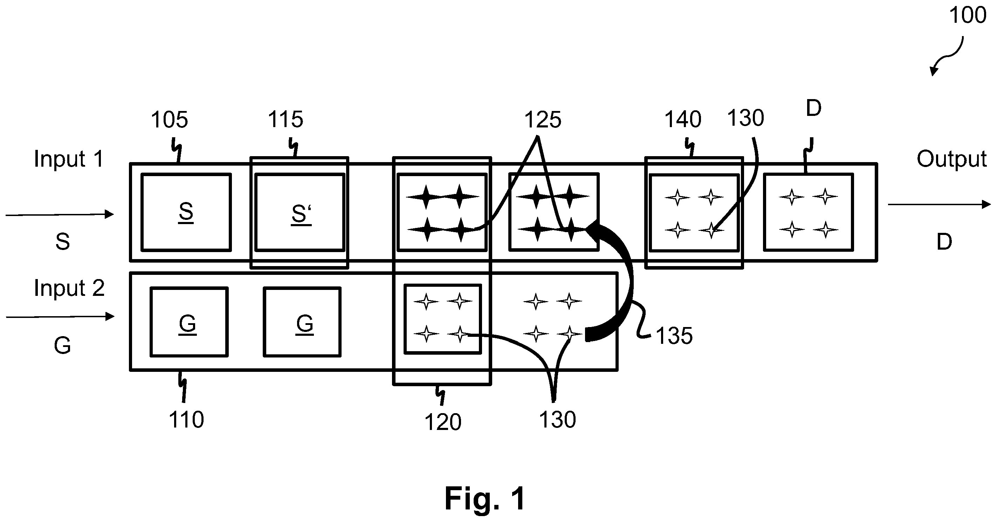

**Fig. 1** schematisch eine erste Ausführungsform des erfindungsgemäßen Verfahrens, bei Einlegekörpermittels eines Transportbands Grundkörper, aus denen die Einlegekörper gewonnen werden, zugeführt werden, sowie eine dazu korrespondierende Vorrichtung, wobei Input und Output auf verschiedenen Seiten der Vorrichtung erfolgen;

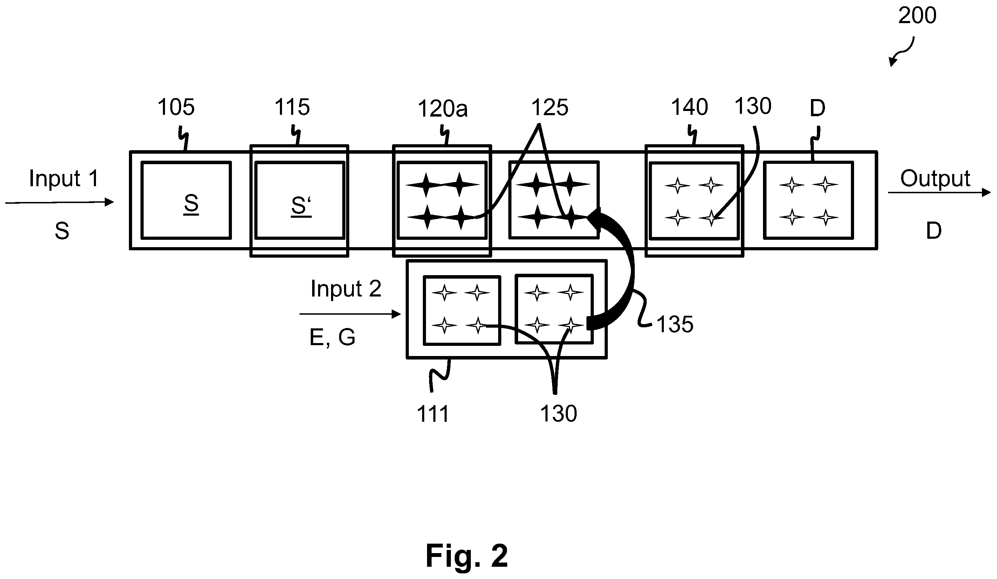

**Fig. 2** schematisch eine zweite Ausführungsform des erfindungsgemäßen Verfahrens, bei dem die Einlegekörper aus einem Magazin oder mittels eines Transportbands jeweils als in einem Grundkörper vorkonfigurierte Elemente zugeführt werden, sowie eine dazu korrespondierende Vorrichtung, wobei Input und Output auf verschiedenen Seiten der Vorrichtung erfolgen;

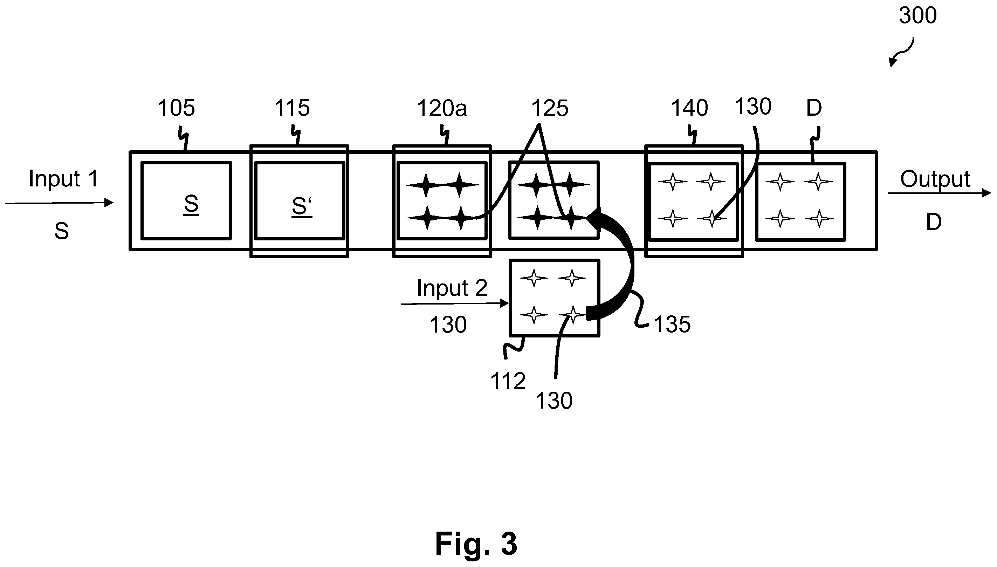

**Fig. 3** schematisch eine dritte Ausführungsform des erfindungsgemäßen Verfahrens, bei dem die Einlegekörper aus einem Magazin jeweils bereits als solche zugeführt werden, sowie eine dazu korrespondierende Vorrichtung, wobei Input und Output auf verschiedenen Seiten der Vorrichtung erfolgen;

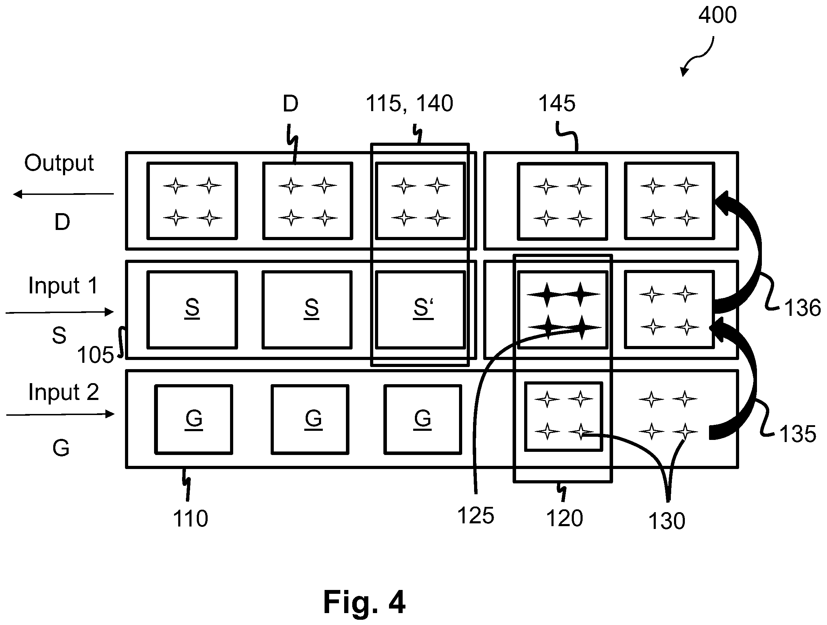

**Fig. 4** schematisch eine vierte Ausführungsform des erfindungsgemäßen Verfahrens, bei dem mittels eines Transportbands Grundkörper, aus denen die Einlegekörper gewonnen werdenEinlegekörper zugeführt werden, sowie eine dazu korrespondierende Vorrichtung, wobei Input und Output auf derselben Seite der Vorrichtung erfolgen;

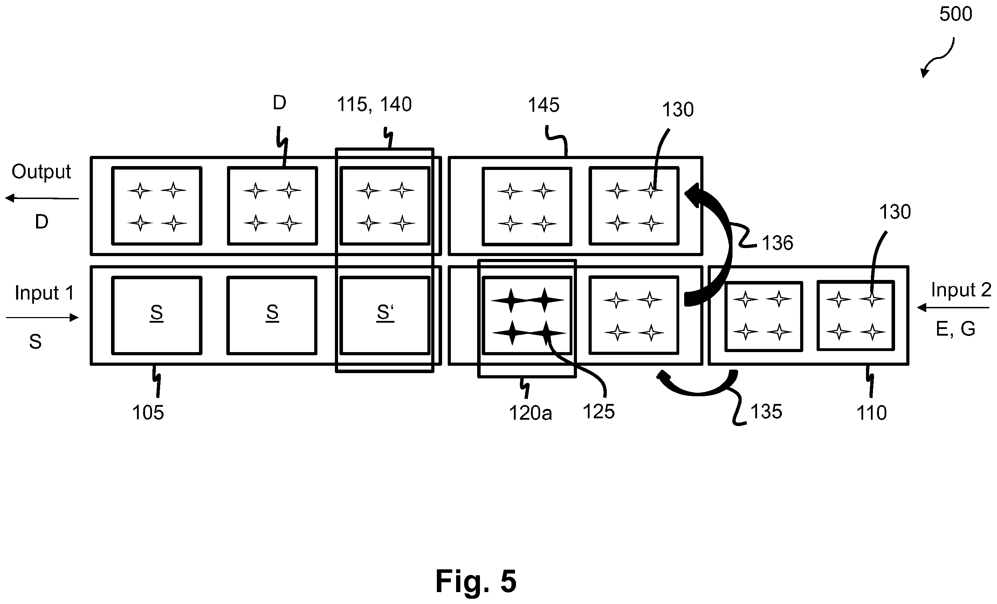

**Fig. 5** schematisch eine fünfte Ausführungsform des erfindungsgemäßen Verfahrens, bei dem die Einlegekörper als vorkonfigurierte Elemente eines zugleich als Transportmittel dienenden band- oder bogenförmigen Grundkörpers zugeführt werden, sowie eine dazu korrespondierende Vorrichtung;

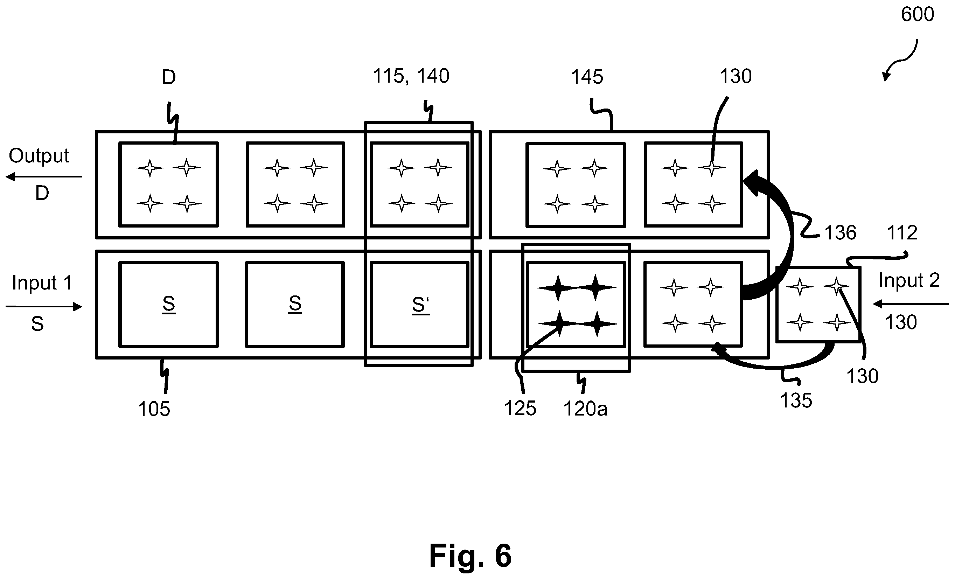

**Fig. 6** schematisch eine sechste Ausführungsform des erfindungsgemäßen Verfahrens, bei dem die Einlegekörper aus einem Magazin jeweils bereits als solche zugeführt werden, sowie eine dazu korrespondierende Vorrichtung, wobei Input und Output auf derselben Seite der Vorrichtung erfolgen;

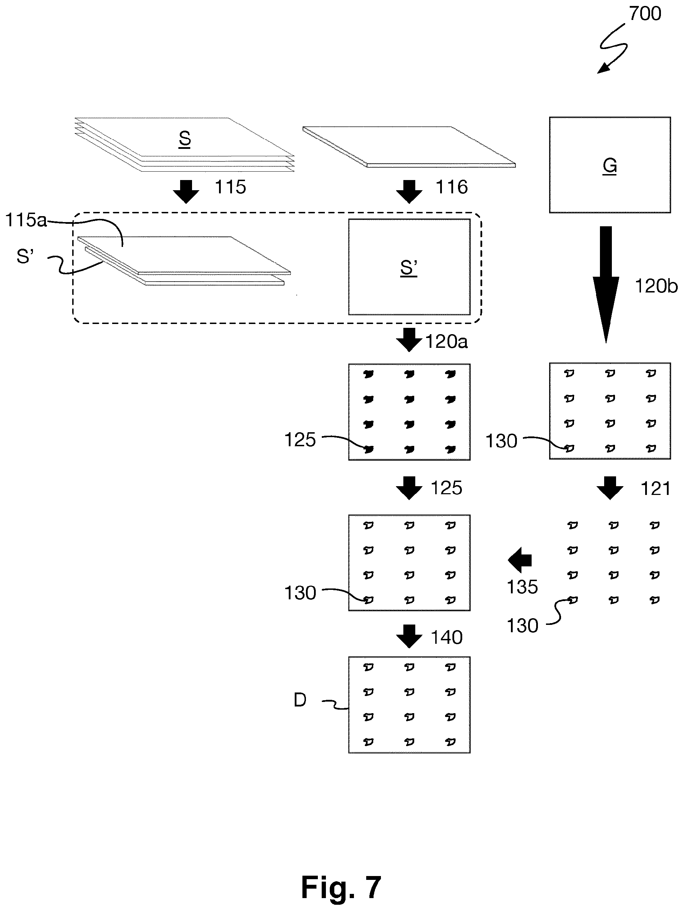

**Fig. 7** schematisch eine Darstellung zur Illustration von zwei Varianten für das Bereitstellen und weitere Bearbeiten des mehrschichtigen Stapels bei einem erfindungsgemäßen Verfahren, wobei der Stapel vor der Erzeugung von Ausnehmungen vollflächig vorlaminiert ist oder wird;

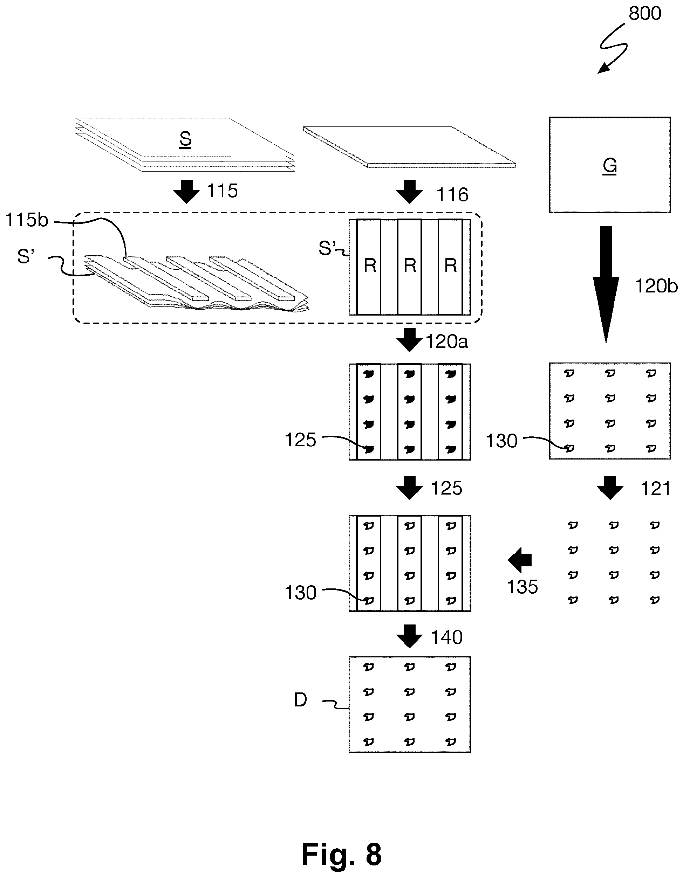

**Fig. 8** schematisch eine Darstellung zur Illustration von zwei weiteren beispielhaften Varianten für das Bereitstellen und weitere Bearbeiten des mehrschichtigen Stapels bei einem erfindungsgemäßen Verfahren, wobei der Stapel vor der Erzeugung von Ausnehmungen in diskreten streifenförmigen Flächenabschnitten vorlaminiert ist oder wird; und

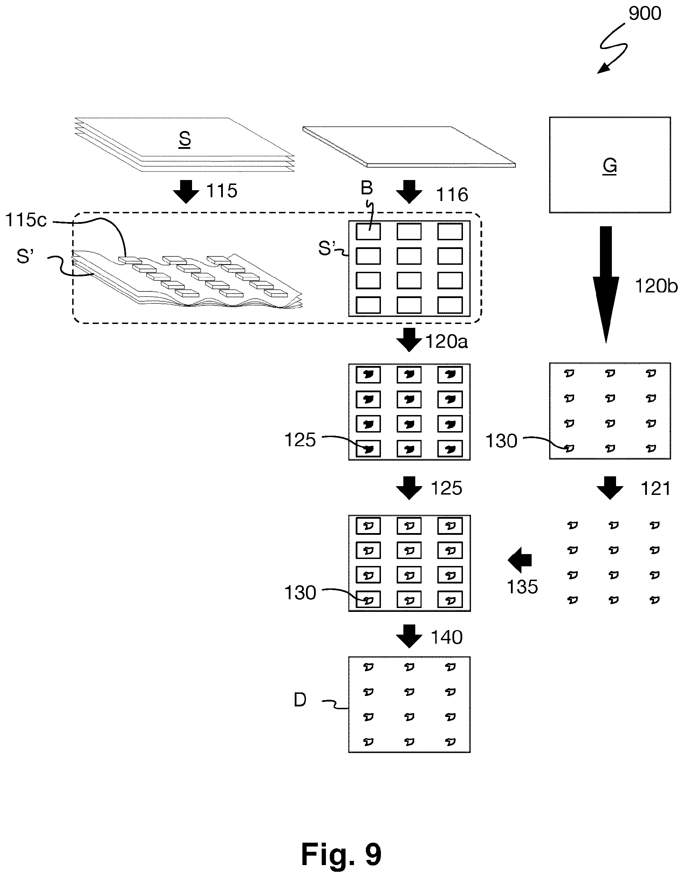

**Fig. 9** schematisch eine Darstellung zur Illustration von zwei weiteren beispielhaften Varianten für das Bereitstellen und weitere Bearbeiten des mehrschichtigen Stapels bei einem erfindungsgemäßen Verfahren, wobei der Stapel vor der Erzeugung von Ausnehmungen in diskreten inselförmigen Flächenabschnitten, insbesondere mit einem Flächenabschnitt pro herzustellender Ausnehmung, vorlaminiert ist oder wird.

In den Figuren werden durchgängig dieselben Bezugszeichen für dieselben oder einander entsprechenden Elemente der Erfindung verwendet.

Bei der in **Fig. 1** illustrierten ersten Ausführungsform 100 des erfindungsgemäßen Verfahrens, werden an einer selben ersten Seite einer Vorrichtung zur Dokumentensubstratherstellung einerseits ein mehrschichtiger Stapel S von lose aufeinanderliegenden flachen Substratschichten (als Input 1) und andererseits ein Grundkörper G, der insbesondere aus transparentem Material, insbesondere einem Kunststoffmaterial, hergestellt und dabei band-, folien- oder plattenförmig ausgestaltet sein kann, der Vorrichtung zugeführt (als Input 2). Insbesondere werden der Stapel S mittels einer ersten Fördereinrichtung 105, beispielsweise einem Transportband, und der Grundkörper G mittels einer zweiten Fördereinrichtung 110, die insbesondere wiederum ein Transportband sein kann, zugeführt. Alternativ dazu ist es auch möglich, dass der Grundkörper G bandförmig ausgestaltet ist, und ähnlich einem Transportband, selbst, beispielsweise von Rolle oder Walze zu Rolle bzw. Walze, der Vorrichtung zur Verarbeitung im Rahmen des Verfahrens zugeführt wird.

In einem Schritt 115 wird der lose Stapel S mittels einer Laminiereinrichtung der Vorrichtung vorlaminiert. Dies kann insbesondere, wie im Weiteren unter Bezugnahme auf die Figuren 7 bis 9 im Einzelnen noch erläutert werden wird, vollflächig, oder nur flächenanteilig, insbesondere in streifenförmigen oder inselförmigen Flächenabschnitten des vorlaminierten Stapels S' erfolgen.

Es folgt ein weiterer Verarbeitungsschritt 120, bei dem zum einen eine oder mehrere, insbesondere durchgängige, Ausnehmungen (Öffnungen) 125, (im vorliegenden Beispiel sind vier Ausnehmungen 125 illustriert), etwa mittels Stanzen oder mechanischen oder optischen Ausschneiden (beispielsweise optisch mittels eines gesteuerten Laserstrahls), in dem vorlaminierten Stapel S' erzeugt werden. Dies geschieht jeweils so, dass die dabei entstehenden Innenwände (bzw. Konturen) der Ausnehmungen 125 ausschließlich in einem jeweiligen vordefinierten Flächenabschnitt des Stapels S' liegen. So kann sichergestellt werden, dass bei dem Stanz- bzw. Schneidevorgang die einzelnen Schichten des Stapels sich auch lokal nicht gegeneinander verschieben und somit die relative Ausrichtung der einzelnen Schichten im Stapel S', zumindest im Wesentlichen, erhalten bleibt.

Bei der in Fig. 1 dargestellten Ausführungsform wird in dem Verarbeitungsschritt 120 simultan mit der Erzeugung der einen oder mehreren Ausnehmungen 125 auch eine, insbesondere entsprechende Anzahl, von Einlegekörpern 130 aus dem Grundkörper G gewonnen, insbesondere ebenfalls mittels Stanzen oder Ausschneiden. Im Falle des Stanzens, kann zum simultanen Erzeugen der Ausnehmungen 125 sowie der Einlegekörper 130 eine einzige Stanze eingesetzt werden. Eine solche Stanze wird typischerweise jedoch für die eine oder mehreren Ausnehmungen 125 einerseits sowie für den bzw. die Einlegekörper 130 andererseits verschiedene Stanzwerkzeuge verwenden, die sich jedoch in ihrer Form so gleichen, dass die Formen der Ausnehmungen 125 im Wesentlichen den Formen der Einlegekörper 130 entsprechen und jeder Einlegekörper 130 in eine jeweilige zugeordnete oder bei gleichen Ausnehmungen 125 in jede beliebige dieser Ausnehmungen 125 als Füllung passt. Anstelle der einen Stanze können jedoch jeweils einzelne Stanzen für die Ausnehmungen 125 einerseits und die Einlegekörper 130 andererseits zum Einsatz kommen. Als mögliche Formen der Ausnehmungen bzw. der Einlegekörper kommen, ohne Beschränkung der Allgemeinheit, insbesondere die Folgenden Formklassen in Frage: Stern, Wappen, Nationalflagge, Gesicht, verschiedene geometrische Figuren wie z.B. Rechteck, Kreis, Ellipse, Quadrat, Dreieck oder andere Vielecke usw.

In einem weiteren Verfahrensschritt 135 werden nun der bzw. die erzeugten Einlegekörper 130 in die erzeugten Ausnehmungen 125 eingesetzt, so dass insbesondere jede der Ausnehmungen 125 durch je einen der Einlegekörper 130 gefüllt wird. Dieses Einsetzen der Einlegekörper 130 kann insbesondere mittels einer "Pick-and-Place"-Einrichtung erfolgen, insbesondere einzeln oder gruppenweise (die Gruppe kann insbesondere auch sämtliche Einlegekörper für alle Ausnehmungen 125 des mehrschichtigen Dokumentenstapels S' bzw. des damit zu erzeugenden Dokumentensubstrats D beinhalten).

Es folgt als weiterer Verfahrensschritt 140 ein stoffschlüssiges Befestigen des bzw. der Einlegekörper 130 in ihrer jeweiligen Ausnehmung 125 unter Wärmezuführung als Laminierprozess. Dieser kann zusätzlich zur Wärmezufuhr auch eine Beaufschlagung des Stapels mit dem bzw. den eingesetzten Einlegekörpern 130 mit Druck beinhalten. Als Ergebnis wird ein mehrschichtiges laminiertes Dokumentensubstrat D einschließlich des bzw. der darin nun fest integrierten Einlegekörper 130 bereitgestellt und (als Output) an einer von der ersten Seite verschiedenen Seite der Vorrichtung, insbesondere einer der ersten Seite gegenüberliegenden Seite der Vorrichtung, ausgegeben.

Die zu dem Verfahren 100 korrespondierende Vorrichtung weist somit zumindest eine Vorlaminiereinrichtung zur Ausführung des Schritts 115, zumindest eine Stanz- oder Schneideeinrichtung zur Ausführung des Schritts 120 sowie eine Laminiereinrichtung zur Ausführung des Schritts 140 auf. Dazu kommen gegebenenfalls noch Transporteinrichtungen wie insbesondere die Fördereinrichtungen 105 und 110.

Bei der in **Fig. 2** illustrierten zweiten Ausführungsform 200 des erfindungsgemäßen Verfahrens, handelt es sich um eine Variante der ersten Ausführungsform 100, die sich davon dadurch unterscheidet, dass die Einlegekörper 130 aus einem Magazin oder Transportband 111 jeweils als in einem Grundkörper G vorkonfigurierte, z.B. vorgestanzte oder anderweitig vorperforierte, Elemente zugeführt werden (als Input 2). Zudem können hier die Inputs 1 und 2 optional auch auf verschiedenen Seiten der Vorrichtung erfolgen. Ansonsten entspricht das Verfahren 200, zumindest im Wesentlichen, dem Verfahren 100.

Die zu dem Verfahren 200 korrespondierende Vorrichtung ist somit dazu eingerichtet, Im Falle des Magazins 111, dieses als externes Modul aufzunehmen oder dieses bereits als Bestandteil der Vorrichtung selbst vorzusehen und den Einsatzschritt 135 entsprechend von diesem Magazin 111 aus durchzuführen. Ein Transportband, insbesondere das Transportband 110 kann dann dagegen entfallen.

Bei der in **Fig. 3** illustrierten dritten Ausführungsform 300 des erfindungsgemäßen Verfahrens, handelt es sich um eine weitere Variante der ersten Ausführungsform 100, die sich davon dadurch unterscheidet, dass die Einlegekörper 130 aus einem Einlegekörpermagazin 112 jeweils bereits als solche, d.h. als bereits vereinzelte Einlegekörper E, zugeführt werden (als Input 2). Zudem können auch hier die Inputs 1 und 2 optional auch auf verschiedenen Seiten der Vorrichtung erfolgen. Ansonsten entspricht das Verfahren 300, zumindest im Wesentlichen, dem Verfahren 100.

Die zu dem Verfahren 300 korrespondierende Vorrichtung ist somit dazu eingerichtet, das Einlegekörpermagazin 112 als externes Modul aufzunehmen oder dieses bereits als Bestandteil der Vorrichtung selbst vorzusehen und den Einsatzschritt 135 entsprechend von diesem Einlegekörpermagazin 112 aus durchzuführen. Das Transportband 110 kann dagegen wieder entfallen.

Bei der in **Fig. 4** illustrierten vierten Ausführungsform 400 des erfindungsgemäßen Verfahrens, handelt es sich um eine Variante der ersten Ausführungsform 100, die sich davon insbesondere dadurch unterscheidet, dass die Inputs 1 und 2 sowie der Output auf derselben Seite der zu diesem Verfahren korrespondierenden Vorrichtung vorgenommen werden (Schleifentransport des bzw. der Werkstücke). Des Weiteren besteht ein Unterschied darin, dass neben den Transportbändern 105 und 110 ein oder mehrere weitere Transportbänder oder sonstige Fördereinrichtungen vorgesehen sind, darunter insbesondere eine (dritte) Fördereinrichtung 145, auf die mittels eines Übertragungsschritts 136, der insbesondere wieder mittels einer "Pick-and-Place"-Einrichtung oder einem der Transportbänder durchgeführt werden kann, der vorlaminierte Stapel S' mit den bereits eingelegten Einlegekörpern 130 übertragen wird.

Die Verwendung einer "Pick-and-Place"-Einrichtung ist insbesondere dann angebracht, wenn die Einlegekörper 130 in dem vorlaminierten Stapel S' bereits vor der abschließenden Lamination 140, insbesondere per Reibschluss oder aufgrund einer konischen Form oder wenn die Ausnehmungen 125 nicht durchgängig sondern nur Vertiefungen im Stapel S' bilden, ausreichend in dem Stapel S' fixiert sind, um ein Herausfallen bei dieser Übertragung zu vermeiden.

Besonders vorteilhaft ist bei dieser Ausführungsform, dass nicht nur das Stanzen bzw. Ausschneiden 120 parallelisiert werden kann (simultane Behandlung des Stapels S' und des Grundkörpers G), sondern dass auch das Vorlaminieren 115 und das abschließende Laminieren 140 mittels einer einzigen Laminiereinrichtung erfolgen können, insbesondere so, dass jeweils ein Vorlaminieren 115eines ersten Stapels S sowie ein finales Laminieren 140 eines vorausgegangenen zweiten Stapels S' simultan erfolgen.

Die zu dem Verfahren 400 korrespondierende Vorrichtung ist somit dazu eingerichtet, die vorgenannten Schritte des Verfahrens 400 auszuführen und weist entsprechend insbesondere eine Stanze oder Schneideeinrichtung für das simultane Erzeugen von Ausnehmungen 125 und Einlegekörpern 130 sowie eine Laminiereinrichtung für das simultane Ausführen der Laminierschritte 115 und 140 (bezüglich verschiedener Stapel S bzw. S') auf.

Bei der in **Fig. 5** illustrierten fünften Ausführungsform 500 des erfindungsgemäßen Verfahrens, handelt es sich um eine Variante der vierten Ausführungsform 400, die sich davon vor allem dadurch unterscheidet, dass die Einlegekörper 130 als vorkonfigurierte, z.B. vorgestanzte oder anderweitig vorperforierte, Elemente E eines zugleich als Transportmittel dienenden band- oder bogenförmigen Grundkörpers G zugeführt werden (als Input 2). Zudem können hier die Inputs 1 und 2 optional auch auf verschiedenen Seiten der Vorrichtung erfolgen, wie dargestellt. Dementsprechend entfällt das simultane Stanzen oder Ausschneiden von Ausnehmungen 125 und Einlegekörpern 130, so dass der Schritt 120 nur noch für die Erzeugung der Ausnehmungen 125 durchgeführt werden muss.

Die zu dem Verfahren 500 korrespondierende Vorrichtung ist somit dazu eingerichtet, die vorgenannten Schritte des Verfahrens 500 auszuführen und weist entsprechend insbesondere eine Stanze oder Schneideeinrichtung für das Erzeugen von Ausnehmungen 125 sowie eine Laminiereinrichtung für das simultane Ausführen der Laminierschritte 115 und 140 (bezüglich verschiedener Stapel S bzw. S') auf.

Bei der in **Fig. 6** illustrierten sechsten Ausführungsform 600 des erfindungsgemäßen Verfahrens, handelt es sich um eine Variante der fünften Ausführungsform 500, die sich davon vor allem dadurch unterscheidet, dass die Einlegekörper 130 aus einem Einlegekörpermagazin 112 jeweils bereits als solche, d.h. als bereits vereinzelte Einlegekörper 130, zugeführt werden (als Input 2). Zudem können auch hier die Inputs 1 und 2 optional auch auf verschiedenen Seiten der Vorrichtung erfolgen. Ansonsten entspricht das Verfahren 300, zumindest im Wesentlichen, dem Verfahren 100.

Die zu dem Verfahren 600 korrespondierende Vorrichtung ist somit dazu eingerichtet, das Einlegekörpermagazin 112 als externes Modul aufzunehmen oder dieses bereits als Bestandteil der Vorrichtung selbst vorzusehen und den Einsatzschritt 135 entsprechend von diesem Einlegekörpermagazin 112 aus durchzuführen. Das Transportband 110 kann dagegen wieder entfallen.

Die zu dem Verfahren 600 korrespondierende Vorrichtung ist somit dazu eingerichtet, die vorgenannten Schritte des Verfahrens 600 auszuführen und weist entsprechend insbesondere eine Stanze oder Schneideeinrichtung für das Erzeugen von Ausnehmungen 125 sowie eine Laminiereinrichtung für das simultane Ausführen der Laminierschritte 115 und 140 (bezüglich verschiedener Stapel S bzw. S') auf. Sie ist des Weiteren eingerichtet, das Einlegekörpermagazin 112 als externes Modul aufzunehmen oder dieses bereits als Bestandteil der Vorrichtung selbst vorzusehen und den Einsatzschritt 135 entsprechend von diesem Einlegekörpermagazin 112 aus durchzuführen.

**Die** **Figuren 7 bis 9** illustrieren jeweils schematisch verschiedene Varianten für das Bereitstellen und weitere Bearbeiten des mehrschichtigen Stapels bei einem erfindungsgemäßen Verfahren, insbesondere im Hinblick auf verschiedene ausgewählte Möglichkeiten der Vorlamination und der sich jeweils daraus ableitenden weiteren Verarbeitung des vorlaminierten Stapels S'. Die Benennung der einzelnen Verfahrensschritte mit Bezugszeichen entspricht derjenigen aus den vorangegangenen Figuren 1 bis 6.

Bei der Ausführungsform 700 aus **Fig. 7** erfolgt entweder eine Bereitstellung, insbesondere Zuführung, eines losen mehrschichtigen Stapels S mit einer Mehrzahl von aufeinander liegenden flachen Substratschichten oder alternativ dazu in einem Schritt 116 eine Bereitstellung, insbesondere Zuführung, eines bereits außerhalb des Rahmens des Verfahrens 700 vorlaminieren Stapels S'. Im ersteren Falle erfolgt im Schritt 115 ein vollflächiges Vorlaminieren des Stapels, wozu insbesondere ein Laminierblech 115a mit einer Hauptfläche des Stapels unter Wärmezufuhr in Kontakt gebracht werden kann, um den vorlaminierten Stapel S' zu erzeugen. Dabei ist auch eine beidseitige Bearbeitung des Stapels S mit Laminierblechen möglich, ebenso wie eine optional zusätzlich zur Wärmezufuhr vorgesehene Beaufschlagung des Stapels S mit Druck.

Der vorlaminierte Stapel S' wird sodann einem Stanz- oder Schneideschritt 120a unterzogen, um einen Satz von Ausnehmungen 125 zu erzeugen, die hier beispielhaft regelmäßig angeordnet sind. Der Stanz- oder Schneideschritt 120a kann insbesondere, ähnlich wie bei dem Verfahren 100 gemäß Fig. 1, simultan mit einem Stanz- oder Schneideschritt 120b zusammenfallen, bei dem aus einem Grundkörper G zu den Ausnehmungen 125 korrespondierende Einlegekörper ausgestanzt bzw. ausgeschnitten werden. Die Schritte 120a und 120b sind in diesem Fall zu einem einzigen Stanz- oder Schneideschritt 120 zusammengefasst.

Optional können die auf diese Weise erzeugten bzw. definierten Einlegekörper 130 noch in einem Schritt 121 vereinzelt werden und beispielsweise in einem Einlegekörpermagazin 112 für den weiteren Verfahrensverlauf zur Verfügung gestellt werden.

Im Schritt 135 werden die erzeugten Einlagenkörper 130 in die Ausnehmungen 125 eingesetzt, sodass jede der Ausnehmungen 125 durch je einen der Einlegekörper 130 gefüllt wird. Es folgt der abschließende Laminierschritt 140 bei dem unter Wärmezufuhr der Stapel S' mit den darin eingelegten Einlegekörpern 130 zu einem mehrschichtigen laminierten Dokumentensubstrat D fest zusammengefügt wird.

Die Ausführungsform 800 aus **Fig.** 8 unterscheidet sich von der Ausführungsform 700 im Wesentlichen nur dadurch, dass bei der Vorlamination 115 anstelle einer vollflächigen Lamination nur eine Lamination in bestimmten Flächenabschnitten des Stapels S' erfolgt, die hier jeweils als Streifen R definiert sind. Das nachfolgende Erzeugen der Ausnehmungen 125 im Schnitt 120a erfolgt ausschließlich innerhalb dieser vorlaminierten Streifen R, sodass die Innenwände der dabei entstehenden Ausnehmungen 125 vollständig innerhalb der vorlaminierten Streifen R liegen.

Die Ausführungsform 900 aus **Fig. 9** unterscheidet sich von der Ausführungsform 700 im Wesentlichen nur dadurch, dass bei der Vorlamination 115 anstelle einer vollflächigen Lamination nur eine Lamination in bestimmten Flächenabschnitten des Stapels S' erfolgt, die hier jeweils als inselförmige Bereiche B definiert sind. Das nachfolgende Erzeugen der Ausnehmungen 125 im Schnitt 120a erfolgt ausschließlich innerhalb dieser vorlaminierten inselförmigen Bereiche B, sodass die Innenwände der dabei entstehenden Ausnehmungen 125 vollständig innerhalb der vorlaminierten Bereiche B liegen. Die jeweiligen Formen dieser inselförmigen Bereiche B können auch untereinander verschieden sein (z. B. Rechteck, Quadrat usw.).

Wie insbesondere anhand der verschiedenen vorgenannten beispielhaften Ausführungsformen aufgezeigt wurde, kann eine Vorrichtung nach dem zweiten Aspekt der Erfindung vorzugsweise modular aufgebaut sein und dadurch insbesondere eine flexible Konfiguration der Vorrichtung ermöglichen. Dabei können insbesondere verschiedene Konfigurationen gewählt werden, die sich in Bezug auf das Vorhandensein und ggf. die räumliche Position der verschiedenen Eingabe- und Ausgabemöglichkeiten (insbesondere Input 1, Input 2, Output) von Vorprodukten (insbesondere Grundkörper, Einlegekörper, Substratstapel) bzw. Endprodukten (Dokumentensubstrat D) des mit der Vorrichtung ausführbaren Verfahrens nach dem ersten Aspekt der Erfindung unterscheiden.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

### BEZUGSZEICHENLISTE

- 100: erste Ausführungsform des Verfahrens
- 105: erste Fördereinrichtung
- 110: zweite Fördereinrichtung
- 111: Magazin bzw. Transportband zur Aufnahme und Bereitstellung von Grundkörpern G
- 112: Magazin zur Aufnahme und Bereitstellung von Einlegekörpern
- 115: Vorlaminieren
- 115a,b,c: Laminierblech(e) bzw. -werkzeuge
- 116: Bereitstellen eines bereits vorlaminierten Stapels S'
- 120: Stanzen oder Schneiden
- 120a: Stanzen oder Schneiden von Ausnehmungen
- 120b: Stanzen oder Schneiden von Einlegekörpern
- 125: Ausnehmungen
- 130: Einlegekörper
- 135: Einsetzen der Einlegekörper in die Ausnehmungen
- 136: Bereitstellen des mehrschichtigen laminierten Substrats mit den darin aufgenommenen und befestigten Einlegekörpern
- 140: finales Laminieren
- 145: dritte Fördereinrichtung

- B: inselförmige vorlaminierte Flächenabschnitte des Stapels S'
- D: laminiertes Dokumentensubstrat
- E: im Grundkörper G vorkonfigurierte Einlegekörper
- G: Grundkörper für daraus gewonnene Einlegekörper
- R: streifenförmige vorlaminierte Flächenabschnitte des Stapels S'
- S: loser, noch nicht vorlaminierter mehrschichtiger Stapel
- S': vorlaminierter Stapel

## Patentansprüche

1. Verfahren (100) zum Herstellen eines mehrschichtigen laminierten Dokumentensubstrats (D) mit einem Einlegekörper (130), wobei das Verfahren (100) mittels einer Vorrichtung zur Dokumentensubstratherstellung ausgeführt wird und folgende Prozesse aufweist:
Bereitstellen (115, 116) eines mehrschichtigen Stapels (S; S') mit einer Mehrzahl von aufeinanderliegenden flachen Substratschichten, wobei die Substratschichten zumindest in einem Flächenabschnitt (R; B) des Stapels (S; S') stoffschlüssig miteinander verbunden sind oder werden;
Erzeugen einer Ausnehmung (125) in dem mehrschichtigen Stapel, sodass die seitliche Innenwand der erzeugten Ausnehmung (125) innerhalb des Flächenabschnitts (R; B) verläuft;
Füllen der Ausnehmung (125) mittels Einbringens (135) eines Einlegekörpers (130) in die Ausnehmung (125); und
stoffschlüssiges Befestigen (140) des Einlegekörpers (130) in der Ausnehmung (125) unter Wärmezufuhr zur Bereitstellung eines mehrschichtigen laminierten Dokumentensubstrats (D) mit Einlegekörper (130),
wobei der Einlegekörper (130) aus einem Material ausgebildet ist oder wird, das in zumindest einem Wellenlängenbereich innerhalb des sichtbaren Bereichs des elektromagnetischen Spektrums transparent oder teiltransparent ist und diese Transparenz beim Befestigen des Einlegekörpers (130), zumindest überwiegend, beibehält.

2. Verfahren (100) nach Anspruch 1, wobei das Befestigen (140) des Einlegekörpers (130) in der Ausnehmung (125) ein vollflächiges Laminieren des mehrschichtigen Stapels (S') einschließlich des in die Ausnehmung (125) aufgenommenen Einlegekörpers (130) aufweist.

3. Verfahren (100) nach Anspruch 2, wobei:
das Bereitstellen (115, 116) des mehrschichtigen Stapels (S') einen ersten Laminierprozess (115) aufweist, bei dem ein abschnittsweises stoffschlüssiges Verbinden der Substratschichten einschließlich im Bereich des zumindest einen Flächenabschnitts (R; B) des Stapels (S') mittels einer Laminiereinrichtung auf solche Weise erfolgt, dass nach diesem ersten Laminierprozess zumindest ein noch nicht laminierter Flächenbereich des Stapels (S') verbleibt; und
das Befestigen (140) des Einlegekörpers (130) in der Ausnehmung (125) mittels eines zweiten Laminierprozesses zur Durchführung des vollflächigen Laminierens des mehrschichtigen Stapels (S') einschließlich des in die Ausnehmung (125) aufgenommenen Einlegekörpers (130) mittels derselben Laminiereinrichtung erfolgt, wie bei dem vorausgegangenen ersten Laminierprozess (115).

4. Verfahren (100) nach einem der vorausgehenden Ansprüche, wobei bei dem bereitzustellenden mehrschichtigen Stapel (S; S'), dessen Substratschichten jeweils an einer Mehrzahl verschiedener Flächenabschnitte des Stapels (S; S') mittels Laminieren verbunden sind oder werden, zumindest zwei dieser Flächenabschnitte (R) eine gleiche Form aufweisen und die Ausnehmung (125) einfach oder mehrfach in je einem dieser Flächenabschnitte (R) erzeugt wird.

5. Verfahren (100) nach einem der vorausgehenden Ansprüche, wobei die Ausnehmung (125) als eine sich vollständig durch die Dicke des Stapels (S') hindurch erstreckende Öffnung ausgebildet wird.

6. Verfahren (100) nach einem der vorausgehenden Ansprüche, wobei das Erzeugen (120; 120a) der Ausnehmung (125) mittels Stanzen oder Ausschneiden (120) erfolgt.

7. Verfahren (100) nach Anspruch 6, wobei zusätzlich der Einlegekörper (130) aus einem flachen Grundkörper (G) ebenfalls mittels Stanzen oder Ausschneiden (120; 120b) hergestellt oder vorkonfiguriert wird, und das Stanzen bzw. Ausschneiden (120, 120a) der Ausnehmung (125) einerseits und das Stanzen bzw. Ausschneiden (120, 120b) des Einlegekörpers (130) andererseits mittels einer selben Stanz- bzw. Schneideeinrichtung erfolgen.

8. Verfahren (100) nach Anspruch 7, wobei das Vorkonfigurieren ein anteiliges Stanzen bzw. Ausschneiden (120, 120b) auf solche Weise aufweisen, dass dadurch die Außenkontur des Einlegekörpers (130) bereits überwiegend definiert, aber der Einlegekörper (130) noch an zumindest einer Verbindungsstelle mit dem Grundkörper (G) verbunden bleibt, die erst bei einem nachfolgenden Prozess (121) zum Herauslösen des Einlegekörpers (130) aus dem Grundkörper (G) vor oder bei seinem Einsetzen in die Ausnehmung (125) aufgetrennt wird.

9. Verfahren (100) nach einem der vorausgehenden Ansprüche, wobei:
der Einlegekörper (130), oder
im Falle des Rückbezugs auf Anspruch 7 der Grundkörper (G) einschließlich des damit noch verbundenen Einlegekörpers (130),
mittels eines Magazins (111;112) zur Aufnahme und Bereitstellung einer Mehrzahl von Einlegekörpern bzw. Grundkörpern (G) für die weitere Verarbeitung im Rahmen des Verfahrens bereitgestellt wird.

10. Verfahren (100) nach einem Ansprüche 1 bis 8, wobei :
der Einlegekörper (130), oder
im Falle des Rückbezugs auf Anspruch 7 der Grundkörper (G) einschließlich des damit noch verbundenen Einlegekörpers (130),
mittels eines bewegten Transportbandes (110) zur Aufnahme und Bereitstellung einer Mehrzahl von Einlegekörpern bzw. Grundkörpern (G) für die weitere Verarbeitung im Rahmen des Verfahrens (100) bereitgestellt wird.

11. Verfahren (100) nach Anspruch 8 in Verbindung mit Anspruch 10, wobei jeder der Grundkörper (G) bandförmig ausgebildet ist oder wird und jeweils selbst das bewegte Transportband bildet.

12. Verfahren (100) nach einem der vorausgehenden Ansprüche, wobei das Bereitstellen des mehrschichtigen laminierten Substrats mit dem darin aufgenommenen und befestigten Einlegekörper (130) an einer anderen Seite der Vorrichtung zur Dokumentensubstratherstellung erfolgt als das dem Erzeugen der Ausnehmung (125) vorgelagerte Bereitstellen des mehrschichtigen Stapels.

13. Verfahren (100) nach einem der Ansprüche 1 bis 11, wobei das Bereitstellen (136) des mehrschichtigen laminierten Substrats mit dem darin aufgenommenen und befestigten Einlegekörper (130) an einer selben Seite der Vorrichtung zur Dokumentensubstratherstellung erfolgt, wie das dem Erzeugen der Ausnehmung (125) vorgelagerte Bereitstellen des mehrschichtigen Stapels.

## Claims

1. Method (100) for producing a multilayer laminated document substrate (D) having an insert (130), wherein the method (100) is carried out by means of a device for document substrate production and comprises the following processes:
providing (115, 116) a multilayer stack (S; S') having a plurality of flat substrate layers lying one on top of the other, wherein the substrate layers are or are connected to one another in a materially bonded manner at least in a surface portion (R; B) of the stack (S; S');
producing a recess (125) in the multilayer stack, such that the lateral inner wall of the produced recess (125) runs within the surface portion (R; B);
filling the recess (125) by means of introducing (135) an insert (130) into the recess (125); and
fixing (140) the insert (130) in the recess (125) in a materially bonded manner with the supply of heat in order to provide a multilayer laminated document substrate (D) having an insert (130),
wherein the insert (130) is or is formed from a material which is transparent or partially transparent in at least one wavelength range within the visible range of the electromagnetic spectrum and retains this transparency, at least predominantly, during the fixing of the insert (130).

2. Method (100) according to Claim 1, wherein the fixing (140) of the insert (130) in the recess (125) comprises full-area lamination of the multilayer stack (S') including the insert (130) received in the recess (125).

3. Method (100) according to Claim 2, wherein:
the providing (115, 116) of the multilayer stack (S') comprises a first lamination process (115), in which the substrate layers, including in the region of the at least one surface portion (R; B) of the stack (S'), are connected in a materially bonded manner in portions by means of a laminating device in such a way that at least one not yet laminated surface region of the stack (S') remains after this first lamination process; and
the fixing (140) of the insert (130) in the recess (125) is carried out by means of a second lamination process for carrying out full-area lamination of the multilayer stack (S') including the insert (130) received in the recess (125) by means of the same laminating device as in the preceding first lamination process (115).

4. Method (100) according to one of the preceding claims, wherein, in the multilayer stack (S; S') to be provided, the substrate layers of which are or are connected in each case to a plurality of different surface portions of the stack (S; S') by means of lamination, at least two of these surface portions (R) have an identical shape and the recess (125) is produced once or more than once in each of these surface portions (R).

5. Method (100) according to one of the preceding claims, wherein the recess (125) is formed as an opening extending completely through the thickness of the stack (S').

6. Method (100) according to one of the preceding claims, wherein the production (120; 120a) of the recess (125) is effected by means of punching or cutting out (120).

7. Method (100) according to Claim 6, wherein, in addition, the insert (130) is produced or preconfigured from a flat base body (G) likewise by means of punching or cutting out (120; 120b), and the punching or cutting out (120, 120a) of the recess (125), on the one hand, and the punching or cutting out (120, 120b) of the insert (130), on the other hand, are effected by means of the same punching or cutting device.

8. Method (100) according to Claim 7, wherein the preconfiguring comprises proportional punching or cutting out (120, 120b) in such a way that, as a result, the outer contour of the insert (130) already predominantly defines, but the insert (130) still remains connected to the base body (G) at at least one connecting point which is only severed during a subsequent process (121) for detaching the insert (130) from the base body (G) before or during its insertion into the recess (125).

9. Method (100) according to one of the preceding claims, wherein:
the insert (130), or
in the case of reference back to Claim 7, the base body (G) including the insert (130) still connected thereto,
is provided by means of a magazine (111; 112) for receiving and providing a plurality of inserts or base bodies (G) for further processing within the scope of the method.

10. Method (100) according to one of Claims 1 to 8, wherein:
the insert (130), or
in the case of reference back to Claim 7, the base body (G) including the insert (130) still connected thereto,
is provided by means of a moving transport belt (110) for receiving and providing a plurality of inserts or base bodies (G) for further processing within the scope of the method (100).

11. Method (100) according to Claim 8 in conjunction with Claim 10, wherein each of the base bodies (G) is or is formed in the form of a belt and in each case itself forms the moving transport belt.

12. Method (100) according to one of the preceding claims, wherein the provision of the multilayer laminated substrate having the insert (130) received and fixed therein is effected on a different side of the device for document substrate production than the provision of the multilayer stack preceding the production of the recess (125).

13. Method (100) according to one of Claims 1 to 11, wherein the provision (136) of the multilayer laminated substrate having the insert (130) received and fixed therein is effected on a same side of the device for document substrate production as the provision of the multilayer stack preceding the production of the recess (125).

## Revendications

1. Procédé (100) de fabrication d'un substrat de document stratifié multicouche (D) avec un corps d'insertion (130), le procédé (100) étant réalisé au moyen d'un dispositif de fabrication de substrat de document et présentant les processus suivants:
mise à disposition (115, 116) d'une pile multicouche (S; S') avec une pluralité de couches de substrat plates superposées, les couches de substrat étant ou étant reliées les unes aux autres par liaison de matière au moins dans une section de surface (R; B) de la pile (S; S');
création d'un évidement (125) dans la pile multicouche, de sorte que la paroi intérieure latérale de l'évidement créé (125) s'étende à l'intérieur de la section de surface (R; B);
remplissage de l'évidement (125) par introduction (135) d'un corps d'insertion (130) dans l'évidement (125); et
fixation par liaison de matière (140) du corps d'insertion (130) dans l'évidement (125) avec apport de chaleur pour la mise à disposition d'un substrat de document stratifié multicouche (D) avec corps d'insertion (130),
le corps d'insertion (130) étant ou étant réalisé en un matériau qui est transparent ou partiellement transparent dans au moins une plage de longueurs d'onde à l'intérieur de la plage visible du spectre électromagnétique et conserve cette transparence lors de la fixation du corps d'insertion (130), au moins principalement.

2. Procédé (100) selon la revendication 1, la fixation (140) du corps d'insertion (130) dans l'évidement (125) présentant un laminage sur toute la surface de la pile multicouche (S') y compris du corps d'insertion (130) reçu dans l'évidement (125).

3. Procédé (100) selon la revendication 2,
la mise à disposition (115, 116) de la pile multicouche (S') présentant un premier processus de laminage (115), dans lequel une liaison par liaison de matière par sections des couches de substrat y compris dans la région de l'au moins une section de surface (R; B) de la pile (S') s'effectue au moyen d'un dispositif de laminage de telle sorte qu'après ce premier processus de laminage reste au moins une région de surface non encore laminée de la pile (S'); et
la fixation (140) du corps d'insertion (130) dans l'évidement (125) s'effectuant au moyen d'un deuxième processus de laminage pour la réalisation du laminage sur toute la surface de la pile multicouche (S') y compris du corps d'insertion (130) reçu dans l'évidement (125) au moyen du même dispositif de laminage que dans le premier processus de laminage précédent (115).

4. Procédé (100) selon l'une quelconque des revendications précédentes, dans lequel dans la pile multicouche (S; S') à mettre à disposition, dont les couches de substrat sont ou sont reliées respectivement au niveau d'une pluralité de sections de surface différentes de la pile (S; S') par laminage, au moins deux de ces sections de surface (R) présentent une forme identique et l'évidement (125) est créé une ou plusieurs fois dans chacune de ces sections de surface (R).

5. Procédé (100) selon l'une quelconque des revendications précédentes, l'évidement (125) étant réalisé sous forme d'ouverture s'étendant complètement à travers l'épaisseur de la pile (S').

6. Procédé (100) selon l'une quelconque des revendications précédentes, la création (120; 120a) de l'évidement (125) s'effectuant par estampage ou découpage (120).

7. Procédé (100) selon la revendication 6, le corps d'insertion (130) étant en outre fabriqué ou préconfiguré à partir d'un corps de base plat (G) également par estampage ou découpage (120; 120b), et l'estampage ou découpage (120, 120a) de l'évidement (125) d'une part et l'estampage ou découpage (120, 120b) du corps d'insertion (130) d'autre part s'effectuant au moyen d'un même dispositif d'estampage ou de découpage.

8. Procédé (100) selon la revendication 7, la préconfiguration présentant un estampage ou découpage proportionnel (120, 120b) de telle sorte que le contour extérieur du corps d'insertion (130) soit ainsi déjà défini principalement, mais que le corps d'insertion (130) reste encore relié au corps de base (G) au niveau d'au moins un point de liaison qui n'est séparé que lors d'un processus suivant (121) pour détacher le corps d'insertion (130) du corps de base (G) avant ou lors de son insertion dans l'évidement (125).

9. Procédé (100) selon l'une quelconque des revendications précédentes,
le corps d'insertion (130), ou
dans le cas de la référence à la revendication 7, le corps de base (G) y compris le corps d'insertion (130) encore relié à celui-ci,
étant mis à disposition au moyen d'un magasin (111; 112) pour la réception et la mise à disposition d'une pluralité de corps d'insertion ou corps de base (G) pour le traitement ultérieur dans le cadre du procédé.

10. Procédé (100) selon l'une quelconque des revendications 1 à 8,
le corps d'insertion (130), ou
dans le cas de la référence à la revendication 7, le corps de base (G) y compris le corps d'insertion (130) encore relié à celui-ci,
étant mis à disposition au moyen d'une bande transporteuse mobile (110) pour la réception et la mise à disposition d'une pluralité de corps d'insertion ou corps de base (G) pour le traitement ultérieur dans le cadre du procédé (100).

11. Procédé (100) selon la revendication 8 en liaison avec la revendication 10, chacun des corps de base (G) étant ou étant réalisé en forme de bande et formant respectivement lui-même la bande transporteuse mobile.

12. Procédé (100) selon l'une quelconque des revendications précédentes, la mise à disposition du substrat stratifié multicouche avec le corps d'insertion (130) reçu et fixé dans celui-ci s'effectuant sur un autre côté du dispositif de fabrication de substrat de document que la mise à disposition de la pile multicouche en amont de la création de l'évidement (125).

13. Procédé (100) selon l'une quelconque des revendications 1 à 11, la mise à disposition (136) du substrat stratifié multicouche avec le corps d'insertion (130) reçu et fixé dans celui-ci s'effectuant sur un même côté du dispositif de fabrication de substrat de document que la mise à disposition de la pile multicouche en amont de la création de l'évidement (125).
